Europäisches Patentamt
European Patent Office
Office européen des brevets

(19)

(11) Veröffentlichungsnummer: **0 428 483 A1**

(12) # EUROPÄISCHE PATENTANMELDUNG

(21) Anmeldenummer: **90810851.7**

(22) Anmeldetag: **06.11.90**

(51) Int. Cl.[5]: **A01N 43/40**, //(A01N43/40, 47:36,43:88,43:70,43:56,37:40, 37:26,37:22,37:18,35:10)

(30) Priorität: **14.11.89 CH 4087/89**

(43) Veröffentlichungstag der Anmeldung: **22.05.91 Patentblatt 91/21**

(84) Benannte Vertragsstaaten: **AT BE CH DE DK ES FR GB GR IT LI LU NL SE**

(71) Anmelder: **CIBA-GEIGY AG**
**Klybeckstrasse 141**
**CH-4002 Basel(CH)**

(72) Erfinder: **Iwanzik, Wolfgang Paul, Dr.**
**Bodenackerstrasse 7C**
**CH-4334 Sisseln(CH)**
Erfinder: **Quadranti, Marco, Dr.**
**Spitalrain 7**
**CH-5200 Brugg(CH)**

(54) **Synergistisches Mittel und Verfahren zur selektiven Unkrautbekämpfung.**

(57) Die Erfindung betrifft ein herbizides Mittel, enthaltend als Verbindung der Formel I 2-(3-Chlor-5-trifluormethylpyridin-2-yl-carbonyl)-cyclohex-1-en-1-ol-3-on neben einer synergistisch wirksamen Menge eines weiteren Herbizids

a) der Formel II

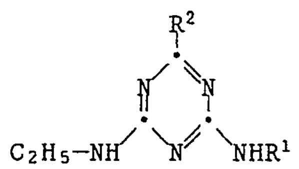

(II), oder

b) der Formel III

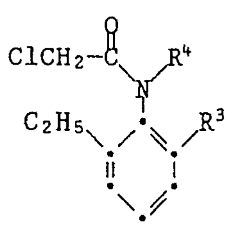

(III) oder

c) der Formel IV

EP 0 428 483 A1

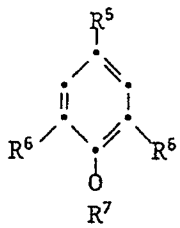

(IV), oder

d) der Formel V

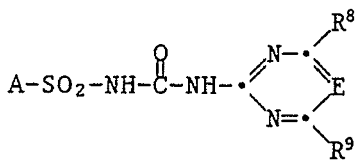

(V),

wobei die Reste $R^1$ bis $R^9$, A und E die im Text der Anmeldung gegebene Bedeutung haben oder eine der Verbindungen

e) 2-tert-Butyl-3-cyano-4-methylaminocarbonylpyrrol, oder

f) 3-Isopropyl-1H-2,1,3-benzothiadiazin-4(3H)-on-2,2-dioxid, oder

g) N-Chloracetyl-N-isopropyl-3,3,6-trimethyl-cyclohex-1-en.

Die Erfindung betrifft ferner ein Verfahren zur selektiven Bekämpfung von Unkräutern in Nutzpflanzenkulturen und die Verwendung dieser Mittel zur Bekämpfung von Unkräutern in Nutzpflanzenkulturen.

## SYNERGISTISCHES MITTEL UND VERFAHREN ZUR SELEKTIVEN UNKRAUTBEKÄMPFUNG

Die vorliegende Erfindung betrifft ein synergistisches Mittel, eine herbizide Wirkstoff-Kombination enthaltend. Das erfindungsgemässe Mittel eignet sich zur selektiven Unkrautbekämpfung in Nutzpflanzenkulturen, insbesondere in Mais.

Die Erfindung betrifft auch ein Verfahren zur Bekämpfung von Unkräutern in Nutzpflanzenkulturen, vorzugsweise in Mais, Zuckerrohr und anderen Kulturen und die Verwendung dieses neuen Mittels.

Aus der EP-A 353 187 resp. dem Südafrikanischen Patent 89/5610 ist 2-(3-Chlor-5-trifluormethylpyridin-2-yl-carbonyl)-cyclohex-1-en-1-ol-3-on der Formel I

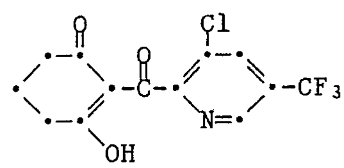

(I)

bekannt geworden. Dieser Wirkstoff besitzt gute selektiv-herbizide Wirkung gegen Unkräuter in Nutzpflanzenkulturen.

Andererseits sind die Verbindungen der Formeln II bis VIII als herbizide Wirkstoffe mit teilweise guter Selektivität in Nutzpflanzenkulturen bekannt. Die Verbindungen der Formeln II bis VIII sind teilweise im Handel erhältlich.

Als Verbindungen der Formeln II bis VIII sind zu nennen:

a) 2-Chlor-4-ethylamino-1,3,5-triazine der Formel II

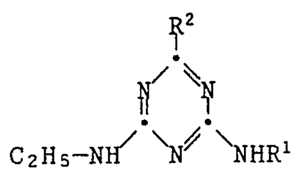

(II),

worin

$R^1$ Isopropyl, tert.-Butyl oder 1-Cyano-1-methylethyl und $R^2$ Chlor oder Methylthio bedeutet.

Die Formel II umfasst insbesondere folgende Einzelverbindungen:

IIa) 2-Chlor-4-ethylamino-6-isopropylamino-1,3,5-triazin, common name "Atrazine" (beschrieben in "The Pesticide Manual, 8th ed. (1987), S. 36, Ed. C.R. Worthing; The British Crop Protection Council, Thornton Heath, GB)

IIb) 2-Chlor-4-ethylamino-6-(1-cyano-1-methylethylamino)-1,3,5-triazin; common nam "Cyanazine"; (beschrieben in "The Pesticide Manual, 8th ed. (1987), S. 198, Ed. C.R. Worthing; The British Crop Protection Council, Thornton Heath, GB)

IIc) 2-Chlor-4-ethylamino-6-tert.-butylamino-1,3,5-triazin; common name "Terbuthylazine"; (beschrieben in "The Pesticide Manual, 8th ed. (1987), S. 778, Ed. C.R. Worthing; lhe British Crop Protection Council, Thornton Heath, GB)

IId) 2-Methylthio-4-ethylamino-6-tert.butylamino-1,3,5-triazin; common name "Terbutryne"; (beschrieben in The Pesticide Manual, 7th ed. (1983) S.515, Ed. C.R. Worthing; The British Crop Protection Council, Thornton Heath, GB).

b) Chloracetanilide der Formel III

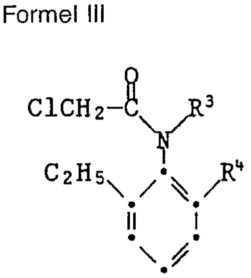

(III)

worin
$R^3$ Methyl oder Ethyl und
$R^4$ Methoxymethyl, Ethoxymethyl oder 2-Methoxy-1-methylethyl bedeutet.
Die Formel III umfasst insbesondere folgende Einzelverbindungen:

IIIa) 2-Chlor-2′-ethyl-6′-methyl-N-(2-methoxy-1-methylethyl)-acetanilid; common name "Metolachlor"; (beschrieben in "The Pesticide Manual, 8th ed. (1987), S. 568, Ed. C.R. Worthing; The British Crop Protection Council, Thornton Heath, GB) und

IIIb) 2-Chlor-2′,6′-diethyl-N-methoxymethyl-acetanilid; common name "Alachlor"; (beschrieben in "The Pesticide Manual, 8th ed. (1987), S. 5, Ed. C.R. Worthing; The British Crop Protection Council, Thornton Heath, GB).

IIIc) 2-chlor-N-ethoxymethyl-6′-ethyl-acet-o-toluidid; common name "Acetochlor"; (beschrieben in "The Pesticide Manual, 8th ed. (1987) S. 2 Ed. C.R. Worthing; The British Crop Protection Council, Thornton Heath, GB) und

c) Phenole der Formel IV

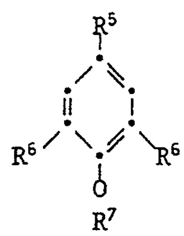

(IV),

worin
$R^6$ Brom oder Jod und
$R^5$ für CN oder den Rest

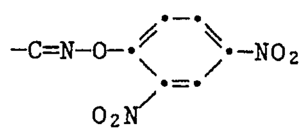

steht, wenn
$R^7$ Wasserstoff bedeutet oder
$R^5$ für CN steht, wenn
$R^7$ $CO-(CH_2)_6-CH_3$
bedeutet.
Die Formel IV umfasst insbesondere folgende Einzelverbindungen:

IVa) 3,5-Dibrom-4-hydroxybenzaldehyd-2,4-dinitrophenyloxim; common name "Bromofenoxim"; (beschrieben in "The Pesticide Manual, 8th ed. (1987), S. 94, Ed. C.R. Worthing; The British Crop Protection Council, Thornton Heath, GB)

IVb) 3,5-Dibrom-4-hydroxybenzonitril; common name "Bromoxynil"; (beschrieben in "The Pesticide Manual, 7th ed. (1983), S. 66/67, Ed. C.R. Worthing; The British Crop Protection Council, Thornton Heath, GB).

d) Sulfonylharnstoffe der Formel V

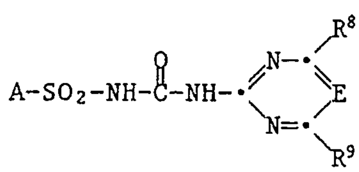

(V)

worin A einen Rest

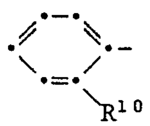 , 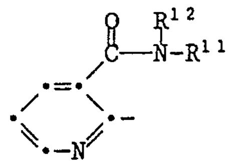 oder 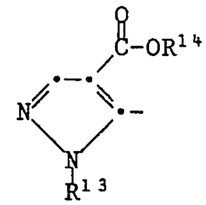

E Stickstoff oder die Methingruppe -C=, $R^8$ und $R^9$ unabhängigvoneinander je Methyl, Methoxy, Chlor oder Halomethoxy,
$R^{10}$ Halogen, Methoxycarbonyl, 2-Chlorethoxy, 2-Methoxyethoxy,
$R^{11}$ Wasserstoff oder $C_1$-$C_4$-Alkyl
$R^{12}$, $R^{13}$ und $R^{14}$ unabhängig voneinander je $C_1$-$C_3$-Alkyl bedeuten.

Die Formel V umfasst insbesondere folgende Einzelverbindungen:

Va) N-(2-Methoxyethoxyphenylsulfonyl)-N′-(4,6-dimethoxy-1,3,5-triazin-2-yl)-harnstoff common name "Cinosulfuron"; (beschrieben in der EP-A 44 807, resp. in der US Patentschrift 4 479 821).

Vb) N-(2-Chlorethoxyphenylsulfonyl)-N′-(4-methoxy-6-methyl-1,3,5-triazin-2-yl-harnstoff; common name "Triasulfuron" (beschrieben in der EP-A 44 808 resp. in der US Patentschrift 4 514 212).

Vc) N-[2-(Methoxycarbonyl)phenyl]sulfonyl-N′-(4,6-bis-difluormethoxypyrimidin-2-yl)-harnstoff; common name "Primisulfuron" (beschrieben in der EP-A 84 020 resp. der US Patentschrift 4 478 635).

Vd) N-[2-(3-Dimethylaminocarbonylpyridin-2-yl)-sulfonyl]-N′-(4,6-dimethoxypyrimidin-2-yl)-harnstoff, bekannt aus EP-A 237 292.

Ve) N-(4-Ethoxycarbonyl-1-methylpyrazol-5-yl-sulfonyl)-N′-(4,6-dimethoxypyrimidin-2-yl)-harnstoff, bekannt aus JP 60/78980, C.A. 104(1): 5895W.

e) Als Verbindung der Formel VI

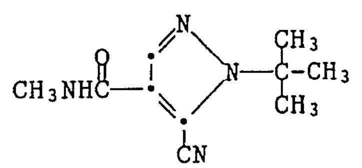 (VI)

2-tert.Butyl-3-cyano-4-methylaminocarbonylpyrrol, comde name "EL 177" oder "GPA 151 867", bekannt aus der EP-A 151 863.

f) Als Verbindung der Formel VII

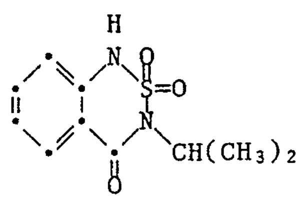 (VII),

3-Isopropyl-1H-2,1,3-benzothiadiazin-4(3H)-on 2,2-dioxid; common name "Bentazone"; (beschrieben in "The Pesticide Manual, 8th ed. (1987), S. 63, Ed. C.R. Worthing; The British Crop Protection Council, Thornton Heath, GB).

g) Als Verbindung der Formel VIII

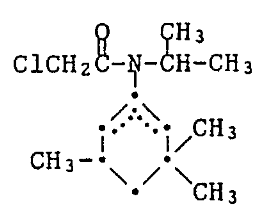 (VIII)

N-Chloracetyl, N-isopropyl-3,3,5-trimethylcyclohex-1-en, common name "Trimexachlor", (beschrieben in "The Pesticide Manual 9th ed. (1989), Ed. C.R. Worthing; The British Crop Protection Council, Thornton Heath, GB).

Die Verbindung der Formel I und ihre Herstellung sind in der Europäischen Patentanmeldung EP-A 353 187 resp. dem Südafrikanischen Patent 89/5610 beschrieben und erfolgt z.B. gemäss folgendem Beispiel:

2-(3-Chlor-5-trifluormethyl-pyridin-2-yl-carbonyl)-cyclohex-1-en-1-ol-3-on

Zu einer Lösung von 2,2 g (20 mMol) 1,3-Cyclohexandion und 7 ml (50 mMol) Triethylamin in 25 ml Dichlormethan werden 4,9 g (20 mMol) 3-Chlor-5-trifluormethylpyridin-2-carbonsäurechlorid getropft, wobei die Temperatur auf 35 °C ansteigt. Anschliessend wird 15 Stunden bei Raumtemperatur ausgerührt. Die schwarze Suspension wird mit 250 ml Dichlormethan verdünnt, bei 0-5 ° mit 1N HCl auf pH 1 gestellt und 2x mit $H_2O$ gewaschen. Das Produkt wird danach mit $NaHCO_3$-Lösung 5 % extrahiert, kalt mit 37 %-iger HCl ausgefällt, genutscht und getrocknet. Man isoliert 4,0 g (63 %) der Titelverbindung der Formel

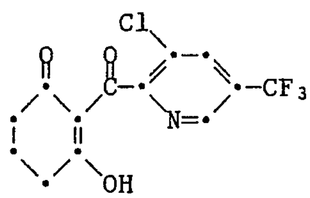

als Kristalle vom Smp. 102-105 °C.

Die Ausgangsmaterialien sowie ihre Herstellung sind bekannt oder können nach bekannten Methoden hergestellt werden.

1,3-Cyclohexandion kann z.B. durch eine Malonestersynthese gemäss dem nachstehenden Schema erhalten werden.

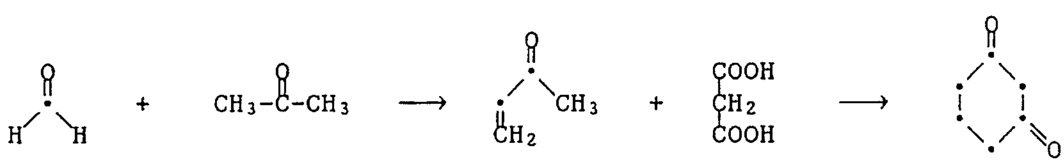

Formaldehyd Aceton Malonsäure

3-Chlor-5-trifluormethylpyridin-2-carbonsäurechlorid ist nach bekannten Verfahren erhältlich z.B. durch Fluorieren eines 3-Chlor-5-methylpyridin-2-carbonsäureesters und nachfolgendem verseifen des entstandenen 3-Chlor-5-trifluormethylpyridin-2-carbonsäureesters und behandeln desselben mit einem starken Chlorierungsmittel.

Es hat sich nun überraschenderweise gezeigt, dass eine mengenmässig variable Kombination zweier Wirkstoffe, einerseits Wirkstoff I und andererseits eine Aktivsubstanz aus den vorgenannten Wirkstoffklassen II bis VIII eine synergistische Wirkung entfaltet, die in vorteilhafter Weise zur Bekämpfung von Unkräutern in Nutzpflanzenkulturen, insbesondere in Mais, geeignet ist. Diese synergistischen Kombinationen sind zur Bekämpfung der Mehrzahl der wichtigen Unkräuter, insbesondere Maisunkräuter, geeignet, ohne dass dabei die Kulturpflanze geschädigt wird.

Es werden die Hauptunkräuter der Getreidekulturen, wie Arten der Monokotyledonengattungen Alopecurus, Avena und Setaria, sowie der Dikotyledonengattungen, Chrysanthenum, Galium, Sinapis, Stellaria und Veronica selektiv sowohl im Vorauflauf- als auch in Nachauflaufverfahren vernichtet. Es wird daher gemäss der vorliegenden Erfindung ein neues synergistisches Mittel zur selektiven Unkrautbekämpfung vorgeschlagen, enthaltend als Wirkstoff 2-(3-Chlor-5-trifluormethylpyridin-2-yl-carbonyl)-cyclohex-1-en-1-ol-3-on der Formel I

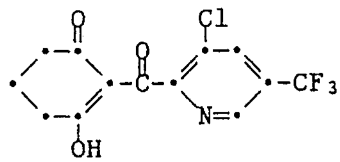

(I)

neben einer synergistisch wirksamen Menge eines weiteren Wirkstoffs

a) der Formel II

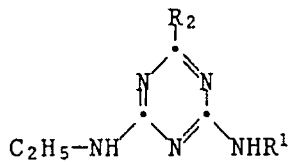

(II),

worin

$R^1$ Isopropyl, tert.-Butyl oder 1-Cyano-1-methylethyl und $R^2$ Chlor oder Methylthio bedeutet, oder

b) der Formel III

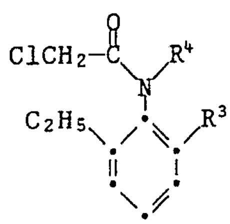

(III),

worin

$R^3$ Methyl oder Ethyl und

$R^4$ Methoxymethyl, Ethoxymethyl oder 2-Methoxy-1-methylethyl

bedeutet, oder

c) der Formel IV

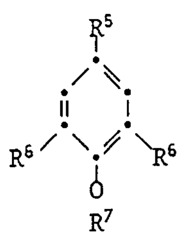

(IV),

worin

$R^6$ Brom oder Iod bedeutet und

$R^5$ für CN oder den Rest

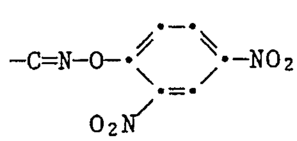

steht, wenn

$R^7$ Wasserstoff bedeutet oder

$R^5$ für CN steht, wenn

$R^7$ $CO-(CH_2)_6-CH_3$
bedeutet, oder
d) der Formel V

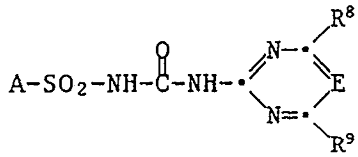 (V)

worin A einen Rest

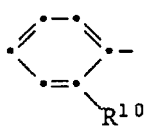 , 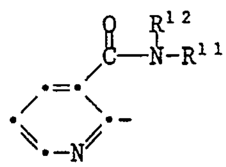 oder 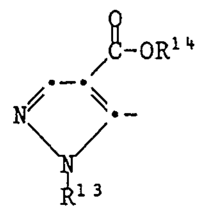

E Stickstoff oder die Methingruppe -C=,
$R^8$ und $R^9$ unabhängig voneinander je Methyl, Methoxy, Chlor oder Halomethoxy,
$R^{10}$ Halogen, Methoxycarbonyl, 2-Chlorethoxy, 2-Methoxyethoxy,
$R^{11}$ Wasserstoff oder $C_1$-$C_4$-Alkyl
$R^{12}$, $R^{13}$ und $R^{14}$ unabhängig voneinander je $C_1$-$C_3$-Alkyl bedeutet, oder
e) der Formel VI

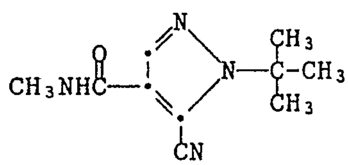 (VI), oder

f) der Formel VII

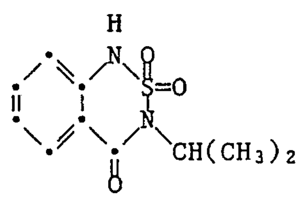 (VII), oder

g) der Formel VIII

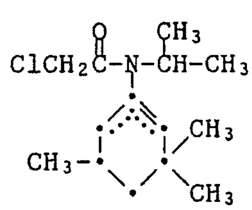 (VIII),

sowie gewünschtenfalls weitere Hilfs- und/oder Trägerstoffe.

Hervorzuheben sind ein erfindungsgemässes Mittel enthaltend neben dem Wirkstoff der Formel I eine

synergistisch wirksame Menge einer Verbindung der Formel IIa, IIc, IIIa, IIIb, IVb, Vc, VI, VII oder VIII.

Die erfindungsgemässen Wirkstoffkombinationen können sowohl pre- als auch postemergent verwendet werden. Ausserdem kann das Saatgut der Nutzpflanze mit einer herbizid wirksamen Menge erfindungsgemässen Wirkstoffkombination behandelt werden (Samenbeizung). Bei der Aussaat der Nutzpflanzen wird so die erfindungsgemässe Wirkstoffkombination ausgebracht.

Insbesondere für die post-emergente Applikatiion geeignet ist die Kombination des Wirkstoffs I mit den Wirkstoffen der Formel II, III, IV, V, VI, VII oder VIII während bei pre-emergenter Applikation die Kombination des Wirkstoffes I mit Verbindungen der Formel II, III, V, VI und VIII bevorzugt ist.

Die erfindungsgemässen Wirkstoffkombinationen eignen sich besonders für Mais.

Es ist in hohem Masse überraschend, dass die Kombination des Wirkstoffs der Formel I mit einem Wirkstoff der Formeln II, III, IV, V, VI oder VII nicht nur eine prinzipiell zu erwartende additive Ergänzung des Wirkungsspektrums auf die üblichen mit Mais vergesellschafteten Unkräuter hervorruft, sondern dass sie einen synergistischen Effekt erzielt, der die Wirkungsgrenzen der miteinander kombinierten Aktivsubstanzen unter zwei Aspekten erweitert.

Einmal werden die Aufwandmengen der Einzelverbindungen I, II, III, IV, V, VI, VII oder VIII bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Mais zur Folge, wie sie für unbeabsichtigte Wirkstoffüberdosierung notwendig und erwünscht ist.

Die erfindungsgemässe Wirkstoffkombination enthält vorzugsweise die Wirkstoffe der Formel II, III, IV, V, VI oder VII in gleichen Mengen oder in einem über Ueberschuss bezogen auf die Menge an Wirkstoff I.

Das Mischungsverhältnis kann in weiten Bereichen frei gewählt werden. Bevorzugt sind Verhältnisse von I zu II, III, IV, V, VI, VII oder VIII von 1:1 bis 1:500, insbesondere 1:2 bis 1:200, besonders bevorzugt von 1:2 bis 1:100.

Die optimalen Verhältnisse der einzelnen Wirkstoffkomponenten können durch biologische Versuche ermittelt werden.

Dabei können die Verhältnisse der einzelnen Wirkstoffkomponenten je nach Art des zu bekämpfenden Unkrauts und in Abhängigkeit von der jeweiligen Applikationsform variieren.

Die erfindungsgemässen Wirkstoffkombinationen zeigen eine ausgezeichnete Wirkung gegen Unkräuter, ohne die Nutzpflanzenkultur nennenswert zu beeinflussen bei 0,005 bis 3,0 kg vorzugsweise 0,01 bis 1,0 kg Aufwandmenge Aktivsubstanz je Hektar.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle vewendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene oder Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B.

Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtionogene, kation-und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na-oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-laurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22#C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, 2er Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthyl-ammoniumbromid.

Die in der Formulierungstechnik gebräuchlichen Tenside sind u.a. in folgenden Publikationen beschrieben:

"1985 International Mc Cutcheon's Emulsifiers & Detergents", Glen Rock NJ USA, 1985",

"H. Stache, "Tensid-Taschenbuch", 2. Aufl., C. Hanser Verlag München, Wien 1981,

M. and J. Ash. "Encyclopedia of Surfactants", Vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und II, III, IV, V, VI, VII oder VIII 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

| Emulgierbare Konzentrate | |
|---|---|
| Aktives Wirkstoffgemisch<br>oberflächenaktives Mittel:<br>flüssiges Trägermittel: | 1 bis 20 %, bevorzugt 5 bis 10 %<br>5 bis 30 %, vorzugsweise 10 bis 20 %<br>50 bis 94 %, vorzugsweise 70 bis 85 % |

| Stäube | |
|---|---|
| Aktives Wirkstoffgemisch:<br>festes Trägermittel: | 0,1 bis 10 %, vorzugsweise 0,1 bis 1 %<br>99,9 bis 90 %, vorzugsweise 99,9 bis 99 %. |

| Suspension-Konzentrate | |
|---|---|
| Aktives Wirkstoffgemisch:<br>Wasser:<br>oberflächenaktives Mittel: | 5 bis 75 %, vorzugsweise 10 bis 50 %<br>94 bis 25 %, vorzugsweise 88 bis 30 %<br>1 bis 40 %, vorzugsweise 2 bis 30 % |

| Benetzbare Pulver | |
|---|---|
| Aktives Wirkstoffgemisch:<br>oberflächenaktives Mittel:<br>festes Trägermaterial: | 0,5 bis 90 %, vorzugsweise 1 bis 80 %<br>0,5 bis 20 %, vorzugsweise 1 bis 15 %<br>5 bis 95 %, vorzugsweise 15 bis 90 % |

| Granulate | |
|---|---|
| aktives Wirkstoffgemisch:<br>festes Trägermittel: | 0,5 bis 30 %, vorzugsweise 3 bis 15 %<br>99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln II, III, IV, V, VI, VII oder VIII z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

Formulierungsbeispiele

Beispiel F1:

Formulierungsbeispiele für synergistische Wirkstoffgemische der Formeln I und II, III, IV, V, VI, VII oder VIII (% = Gewichtsprozent)

| a) Spritzpulver | a) | b) | c) | d) |
|---|---|---|---|---|
| Wirkstoff I und | 10 % | 20 % | 5 % | 30 % |
| einer der Wirkstoffe II, III, IV, V, VI, VII oder VIII | 10 % | 40 % | 15 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyäthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Wirkstoff I und | 5 % | 5 % | 12 % |
| einer der Wirkstoffe II, III, IV, V, VI, VII oder VIII | 5 % | 20 % | 13 % |
| Octylphenolpolyäthylenglykoläther (4-5 Mol AeO) | 3 % | 3 % | 3 % |
| Ca-Dodecylbenzolsulfonat | 3 % | 3 % | 2 % |
| Ricinusölpolyglykoläther (36 Mol AeO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Wirkstoff I | 2 % | 4 % | 2 % | 4 % |
| einer der Wirkstoffe II, III, IV, V, VI, VII oder VIII | 3 % | 4 % | 4 % | 8 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Wirkstoff I und | 5 % | 3 % | 5 % |
| einer der Wirkstoffe II, III, IV, V, VI, VII oder VIII | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
|---|---|---|
| Wirkstoff I und | 1,5 % | 3 % |
| einer der Wirkstoffe II, III, IV, V, VI, VII oder VIII | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff I und | 20 % | 20 % |
| einer der Wirkstoffe II, III, IV, V, VI, VII oder VIII | 20 % | 40 % |
| Aethylenglykol | 10 % | 10 % |
| Nonylphenolpolyäthylenglykoläther (15 Mol AeO | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und II, III, IV, V, VI, VII oder VIII grösser ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonistic response of herbicide combinations", Weeds 15, Seiten 20-22, 1967) wie folgt berechnet werden:

$$We = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0 %).

Y = Prozent Wachstumshemmung bei Behandlung mit einem Herbizid II, III, IV, V, VI, VII oder VIII mit q kg Aufwandmenge pro Hektar im Vergleich zur unbehandelten Kontrolle

We = Erwartete herbizide Wirkung (Prozent Wachstumshemmung im Vergleich zur unbehandelten Kontrolle) nach Behandlung mit Herbizidgemisch I und II, III, IV, V, VI, VII oder VIII bei einer Aufwandmenge von p + q kg Wirkstoffmenge pro Hektar.

Ist die tatsächlich beobachtete Wirkung grösser als der zu erwartende Wert We, so liegt Synergismus vor.

Der synergistische Effekt der Kombinationen der Wirkstoffe I und II, III, IV, V, VI, VII oder VIII wird in den folgenden Beispielen demonstriert.

Biologische Beispiele:

Beispiel B1: Preemergenter Versuch

Die Testpflanzensamen werden in Plastiktöpfe, die 0,5 l sterilisierte Ackererde enthalten, im Gewächshaus angesät. Einen Tag nach der Saat wird die Erdoberfläche mit einer wässrigen Dispersion der Wirkstoffkombination besprüht.

Die Aufwandmenge an Wirksubstanz wird durch geeignete Vedünnung des Konzentrats eingestellt. Man versprüht jeweils 55 ml Dispersion pro $m^2$. Die Testpflanzen werden im Gewächshaus bei täglicher Bewässerung weiterkultiviert. 20 Tage nach Saat und Applikation erfolgt die Auswertung. Registriert wird die prozentuale Wachstumshemmung im Vergleich zur unbehandelten Kontrolle. Als Massstab gilt folgende lineare Skala:

100 % = Pflanzen abgestorben
50 % = mittlere Wirkung
0 % = wie unbehandelte Kontrolle

Die Versuchsergebnisse sind zusammen mit dem nach der oben zitierten Colby-Formel berechneten Erwartungswerten in die Tabellen 1) und 2) eingetragen. Angegeben sind die jeweils angewendeten Aufwandmengen an Wirkstoffen sowie die geprüften Kultur- und Unkrautpflanzen.

In den Tabellen 1) und 2) sind die nach Colby berechneten Erwartungswerte für die jeweilige Testpflanze in der Spalte We den experimentell ermittelten Werten der Spalte W gegenübergestellt.

<u>pre-emergente Aktivität von Gemischen aus I + II, III und VIII.</u>

Auswertung 20 Tage nach Applikation im Vergleich zur unbehandelden Kontrolle (=0 % Herbizidwirkung)

Tabelle 1

| Synergistische Wirkung gegen Amranthus retroflexus im Vorauflaut | | | |
|---|---|---|---|
| | Herbizidwirkung in % | | |
| | gemessen | erwartet (nach Colby) | +/- |
| Verbindung IIIa (Metolachlor) 0.125 kg/ha | 0 | | |
| Verbindung I 0.250 kg/ha | 60 | | |
| Verbindung IIIa + Verbindung I 0.125 + 0.250 kg/ha | 100 | 60 | +40 |
| Verbindung VIII (Trimexachlor) 0.250 kg/ha | 25 | | |
| Verbindung I 0.250 kg/ha | 60 | | |
| Verbindung VIII + Verbindung I 0.250 + 0.250 kg/ha | 100 | 40 | +60 |

Tabelle 2

| Synergistische Wirkung gegen Xanthium im Vorauflauf | | | |
|---|---|---|---|
| | Herbizidwirkung in % | | |
| | gemessen | erwartet (nach Colby) | +/- |
| Verbindung IIIa (Metolachlor) 0.125 kg/ha | 0 | | |
| Verbindung I 0.250 kg/ha | 50 | | |
| Verbindung IIIa + Verbindung I 0.125 + 0.250 kg/ha | 80 | 50 | +30 |
| Verbindung IIa (Atrazin) 0.250 kg/ha | 25 | | |
| Verbindung I 0.250 kg/ha | 60 | | |
| Verbindung IIa + Verbindung I 0.250 + 0.250 kg/ha | 90 | 64 | +26 |

Beispiel B2: Postemergenter Versuch

Die Testpflanzen werden in Plastiktöpfen, die 0,5 l sterilisierte Ackererde enthalten angezogen. Nach dem Auflaufen werden die Pflanzen im 2-3 Blattstadium (ca. 2 Wochen nach der Saat) mit einer wässrigen Dispersion der Wirkstoffkombinationen besprüht. Die Spritzbrühemenge beträgt 55 ml pro $m^2$. Die Aufwandmenge an Wirksubstanzen wird durch geeignete Verdünnung des Konzentrats eingestellt. Die Testpflanzen werden im Gewächshaus bei täglicher Bewässerung weiterkultiviert. 20 Tage nach der Applikation erfolgte die Auswertung. Der Schädigungsgrad der Pflanzen wird prozentual nach gleichem Massstab wie im preemergenten Versuch bewertet.

Die Versuchsergebnisse sind zusammen mit den nach der oben ziterten Colby-Formel berechneten Erwartungswerten in den folgenden Tabellen 3 und 4 eingetragen. Angegeben sind jeweils die angewendeten Aufwandmengen an Wirkstoffen sowie die geprüften Kultur- und Unkrautpflanzen.

Die nach Colby berechneten Erwartungswerte werden auch hier den experimentell ermittelten Werten gegenübergestellt.

Post-emergente Aktivität von Gemischen aus I + II, IV, V, VI und VII.

Tabelle 3

| Synergistische Wirkung gegen Agropyron im Nachauflauf | | | |
|---|---|---|---|
| | Herbizidwirkung in % | | |
| | gemessen | erwartet (nach Colby) | +/- |
| Verbindung IIa (Atrazin) 0.25 kg/ha | 10 | | |
| Verbindung I 0.5 kg/ha | 0 | | |
| Verbindung IIa + Verbindung I 0.25 + 0.5 kg/ha | 90 | 10 | +80 |
| Verbindung IIc (Terbuthylazin) 0.5 kg/ha | 20 | | |
| Verbindung I 0.5 kg/ha | 0 | | |
| Verbindung IIc + Verbindung I 0.5 + 0.5 kg/ha | 60 | 20 | +40 |
| Verbindung Vc (Primisulffuron) 0.03 kg/ha | 20 | | |
| Verbindung I 0.5 kg/ha | 0 | | |
| Verbindung Vc + Verbindung I 0.03 + 0.5 kg/ha | 50 | 20 | +30 |
| Verbindung IVb (Bromoxynil) 1.0 kg/ha | 0 | | |
| Verbindung I 0.5 kg/ha | 0 | | |
| Verbindung IVb + Verbindung I 1.0 + 0.5 kg/ha | 50 | 0 | +50 |

Tabelle 4

| Synergistische Wirkung gegen Convolvulus im Nachauflauf | | | |
|---|---|---|---|
| | Herbizidwirkung in % | | |
| | gemessen | erwartet (nach Colby) | +/- |
| Verbindung IIa (Atrazin) 0.25 kg/ha | 20 | | |
| Verbindung I 0.5 kg/ha | 50 | | |
| Verbindung IIa + Verbindung I 0.25 + 0.25 kg/ha | 95 | 60 | +35 |
| Verbindung VII (Bentazon) 0.5 kg/ha | 25 | | |
| Verbindung I 0.25 kg/ha | 50 | | |
| Verbindung VII + Verbindung I 0.5 + 0.25 kg/ha | 95 | 63 | +32 |
| Verbindung VI (EL 177) 0.25 kg/ha | 0 | | |
| Verbindung I 0.25 kg/ha | 50 | | |
| Verbindung VI + Verbindung I 0.25 + 0.25 kg/ha | 98 | 50 | +48 |

## Ansprüche

1. Herbizides Mittel enthaltend als Wirkstoff 2-(3-Chlor-5-trifluormethylpyridin-2-yl-carbonyl)-cyclohex-1-en-1-ol-3-on der Formel I

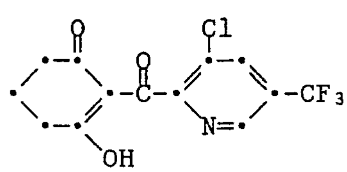

(I)

neben einer synergistisch wirksamen Menge eines weiteren Wirkstoffs
a) der Formel II

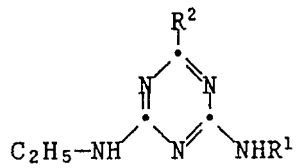

(II),

worin
$R^1$ Isopropyl, tert.-Butyl oder 1-Cyano-1-methylethyl und $R^2$ Chlor oder Methylthio bedeutet, oder
b) der Formel III

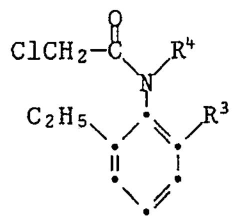

(III),

worin
$R^3$ Methyl oder Ethyl und
$R^4$ Methoxymethyl, Ethoxymethyl oder 2-Methoxy-1-methylethyl bedeutet, oder
c) der Formel IV

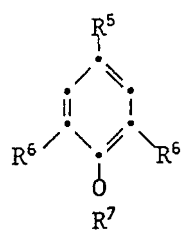

(IV),

worin
$R^6$ Brom oder Iod bedeutet und
$R^5$ für CN oder den Rest

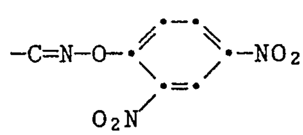

steht, wenn
$R^7$ Wasserstoff bedeutet oder
$R^5$ für CN steht, wenn
$R^7$ $CO-(CH_2)_6-CH_3$
bedeutet, oder
d) der Formel V

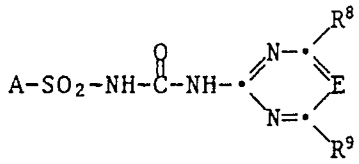 (V)

worin A einen Rest

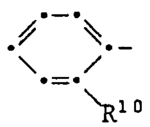 , 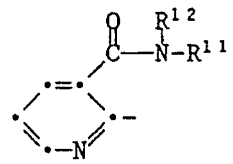 oder 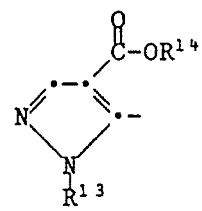

E Stickstoff oder die Methingruppe -C=,
$R^8$ und $R^9$ unabhängig voneinander je Methyl, Methoxy, Chlor oder Halomethoxy,
$R^{10}$ Halogen, Methoxycarbonyl, 2-Chlorethoxy oder 2-Methoxyethoxy,
$R^{11}$ Wasserstoff oder $C_1$-$C_4$-Alkyl
$R^{12}$, $R^{13}$ und $R^{14}$ unabhängig voneinander je $C_1$-$C_3$-Alkyl bedeutet, oder
e) der Formel VI

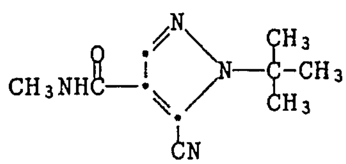 (VI), oder

f) der Formel VII

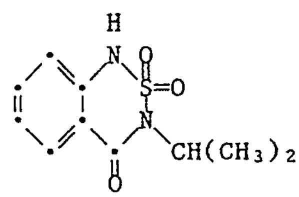 (VII), oder

g) der Formel VIII

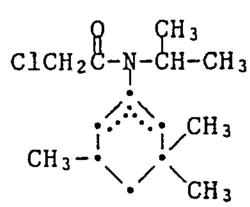 (VIII),

sowie gewünschtenfalls weitere Hilfs- und/oder Trägerstoffe.
2. Herbizides Mittel gemäss Anspruch 1 enthaltend als Verbindung der Formel II
2-Chlor-4-ethylamino-6-isopropylamino-1,3,5-triazin oder
2-Chlor-4-ethylamino-6-(1-cyano-1-methylethylamino)-1,3,5-triazin oder
2-Chlor-4-ethylamino-6-tert.-butylamino-1,3,5-triazin,
2-Methylthio-4-ethylamino-6-tert.-butylamino-1,3,5-triazin.

3. Herbizides Mittel gemäss Anspruch 1 enthaltend als Verbindung der Formel III
2-Chlor-2′-ethyl-6′-methyl-N-(2-methoxy-1-methylethyl)acetanilid oder
2-Chlor-2′,6′-diethyl-N-methoxymethyl-acetanilidoder
2-Chlor-N-ethoxymethyl-6′-ethyl-aceto-toluidid.
4. Herbizides Mittel gemäss Anspruch 1 enthaltend als Verbindung der Formel IV 3,5-Dibrom-4-hydroxybenzaldehyd-2,4-dinitrophenyloxim oder 3,5-Dibrom-4-hydroxybenzonitril.
5. Herbizides Mittel gemäss Anspruch 1 enthaltend als Verbindung der Formel V
N-(2-Methoxyethoxyphenylsulfonyl)-N′-(4,6-dimethoxy-1,3,5-triazin-2-yl)-harnstoff,
N-(2-Chlorethoxyphenylsulfonyl)-N′-(4-methoxy-6-methyl-1,3,5-triazin-2-yl)-harnstoff,
N-[2-(Methoxycarbonyl)phenylsulfonyl]-N′-(4,6-bis-difluormethoxypyrimidin-2-yl)-harnstoff,
N-[2-(3-Dimethylaminocarbonylpyridin-2-yl)-sulfonyl]-N′-(4,6-dimethylpyrimidin-2-yl)-harnstoff oder
N-(4-Ethoxycarbonyl-1-methylpyrazol-5-ylsulfonyl)-N′-(4,6-dimethylpyrimidin-2-yl)-harnstoff.
6. Herbizides Mittel gemäss Anspruch 1 enthaltend als Verbindung der Formel VI 2-tert.Butyl-3-cyano-4-methylaminocarbonylpyrrol.
7. Herbizides Mittel gemäss Anspruch 1 enthaltend als Verbindung der Formel VII 3-Isopropyl-1H-2,1,3-benzothiadiazin-4(3H)-on 2,2-dioxid.
8. Herbizides Mittel gemäss Anspruch 1, enthaltend als Verbindung der Formel VIII N-Chloracetyl-N-isopropyl-3,3,5-trimethylcyclohex-1-en.
9. Herbizides Mittel gemäss einem der Ansprüche 1 bis 8 enthaltend 1 Gewichtsteil des Wirkstoffs der Formel I neben 0,001 bis 10 Gewichtsteilen eines Wirkstoffs der Formel II, III, IV, V, VI, VII oder VIII.
10. Saatgut von Kulturpflanzen, insbesondere Mais, welches mit einer herbizid wirksamen Menge eines Mittels gemäss einem der Ansprüche 1 bis 11 behandelt worden ist.
11. Verfahren zur selektiven pre- und post-emergenten Bekämpfung von Unkräutern in Nutzpflanzenkulturen, insbesondere Mais, dadurch gekennzeichnet, dass man eine herbizid wirksame Menge eines Mittels gemäss einem der Ansprüche 1 bis 11 auf die Nutzpflanzenkultur oder deren Lebensraum einwirken lässt.
12. Verfahren zur selektiven Bekämpfung von Unkräutern in Nutzpflanzenkulturen, gekennzeichnet durch die Verwendung eines Saatgutes gemäss Anspruch11.

Europäisches Patentamt

# EUROPÄISCHER RECHERCHENBERICHT

Nummer der Anmeldung

**EP 90 81 0851**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 316 491 (STAUFFER)<br>* Seite 8, Tabel I, Nr. 3; Seite 5, Zeilen 28-31; Seite 12, Zeilen 47-49 *<br>- - - - - | 1-12 | A 01 N 43/40 //<br>(A 01 N 43/40<br>A 01 N 47:36<br>A 01 N 43:88<br>A 01 N 43:70<br>A 01 N 43:56<br>A 01 N 37:40<br>A 01 N 37:26<br>A 01 N 37:22<br>A 01 N 37:18<br>A 01 N 35:10 ) |

RECHERCHIERTE SACHGEBIETE (Int. Cl.5)

A 01 N

Der vorliegende Recherchenbericht wurde für alle Patentansprüche erstellt

| Recherchenort | Abschlußdatum der Recherche | Prüfer |
|---|---|---|
| Den Haag | 13 Februar 91 | DECORTE D. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument